# EUROPEAN PATENT APPLICATION

(11) **EP 2 530 575 A1**
(43) Date of publication of application: **05.12.2012**
(21) Application number: 12000397.5
(22) Date of filing: 23.01.2012
(51) Int. Cl.: G06F 3/048, G06F 1/16

(54) **Mobile terminal and controlling method thereof**

(30) Priority: 30.05.2011 KR 20110051452
(71) Applicant: LG Electronics Inc., Youngdungpo-gu, Seoul 150-721 (KR)
(72) Inventor: Ohe, Heejung, Seoul 153-801 (KR)
(74) Representative: Beyer, Andreas

(57) **Abstract**

A mobile terminal according to one embodiment of the present invention includes a sensing unit configured to detect motion, a touchscreen configured to display a plurality of icons and a controller configured to control at least one function corresponding to at least one first motion of a plurality of different motions to be set in a first application corresponding to at least a first icon of the plurality of icons when the at least a first icon is selected by a touch on the touchscreen having a first pattern and the at least one first motion is detected via the sensing unit, wherein one or more functions correspond to each of the plurality of different motions.

## Description

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for providing a user interface capable of setting a side function in an application conveniently through a preset motion.

### Discussion of the Related Art

Generally, terminals can be classified into mobile/portable terminals and stationary terminals. The mobile terminals can be further classified into handheld terminals and vehicle mount terminals according to possibility of user's direct portability.

As functions of such a terminal are diversified, the terminal is implemented as a multimedia player provided with composite functions such as photographing of photos or moving pictures, playback of music or video files, game play, broadcast reception and the like for example.

To support and increase of the terminal functions, it may be able to consider the improvement of structural parts and/or software parts of the terminal.

Recently, terminals tend to propagate in a manner of being equipped with a user interface capable of running an application using an icon displayed on a display unit. Therefore, the demand for facilitating a side function setting in an application basically provided to a terminal or an application installed at the terminal is rising.

### SUMMARY OF THE INVENTION

Accordingly, the present invention is directed to a mobile terminal and controlling method thereof that substantially obviate one or more problems due to limitations and disadvantages of the related art.

An object of the present invention is to provide user interface, by which a side function can be conveniently set in an application through a preset motion.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile terminal according to the present invention includes a sensing unit configured to detect motion, a touchscreen configured to display a plurality of icons and a controller configured to control at least one function corresponding to at least one first motion of a plurality of different motions to be set in a first application corresponding to at least a first icon of the plurality of icons when the at least a first icon is selected by a touch on the touchscreen having a first pattern and the at least one first motion is detected via the sensing unit, wherein one or more functions correspond to each of the plurality of different motions.

In another aspect of the present invention, a method of controlling a mobile terminal includes the steps of displaying a plurality of icons on a touchscreen, detecting a touch on the touchscreen having a first pattern to select at least a first icon from the plurality of icons displayed on the touchscreen, detecting at least one first motion of a plurality of different motions via a sensing unit and setting a function corresponding to the detected at least one first motion in a first application corresponding to the selected at least a first icon, wherein one or more functions correspond to each of the plurality of different motions.

Accordingly, the present invention provides the following effects and/or advantages.

First of all, a mobile terminal according to at least one embodiment of the above-configured present invention provides a function of setting a side function in an application conveniently through a preset motion.

Secondly, a mobile terminal according to at least one embodiment of the above-configured present invention is able to set a function that is common to a plurality of applications through a preset motion.

Thirdly, a mobile terminal according to at least one embodiment of the above-configured present invention is able to display a visual effect for indicating that at least one function is provided to a user in accordance with a preset motion.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram of a mobile terminal according to one embodiment of the present invention;
FIG. 2 is a front perspective diagram of a mobile terminal according to one embodiment of the present invention;
FIG. 3 is a front diagram of a mobile terminal according to one embodiment of the present invention to describe one operating status thereof;
FIG. 4 is a flowchart of one example for setting a side function in an application conveniently through a preset motion according to one embodiment of the present invention;
FIG. 5A and 5B are diagrams of one example for setting a side function in an application conveniently through a preset motion according to one embodiment of the present invention;
FIG. 6A and 6B are diagrams of one example for setting a side function in a plurality of applications simultaneously and conveniently through a preset motion according to one embodiment of the present invention;
FIG. 7A and 7B are diagrams of one example for setting a plurality of side functions in an application conveniently through a plurality of preset motions according to one embodiment of the present invention;
FIG. 8A, 8B, 8C, 8D, 8E and 8F are diagrams of one example for displaying a visual effect to indicate that a plurality of functions corresponding to a preset motion are provided to a user according to one embodiment of the present invention;
FIG. 9A and 9B are diagrams of one example for displaying a menu for changing or adding a function corresponding to a motion according to one embodiment of the present invention;
FIG. 10A, 10B, 10C, 10D, 10E, 10F, 10G, 10H and 10I
   are diagrams of one example for inputting a character to correspond to a motion of a terminal according to one embodiment of the present invention;

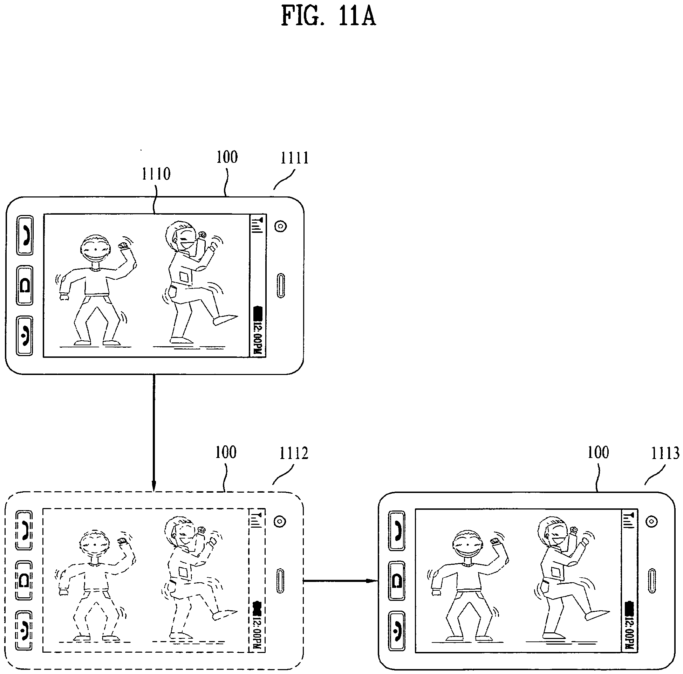

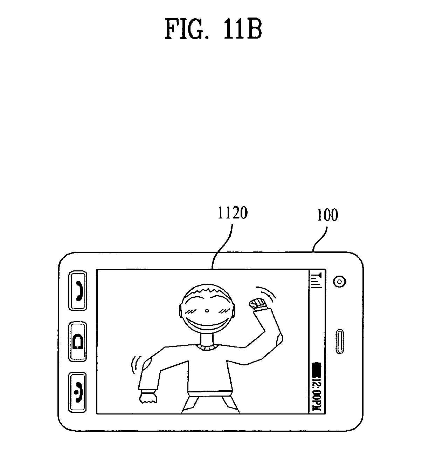

FIG. 11A and 11B are diagrams of one example for setting a zoom-in function conveniently to correspond to a motion in a camera mode according to one embodiment of the present invention;
FIG. 12A, 12B, 12C, 12D, 12E and 12F
   are diagrams of one example for facilitating a photo view mode setting of a thumbnail type to correspond to a motion in a photo view mode according to one embodiment of the present invention;

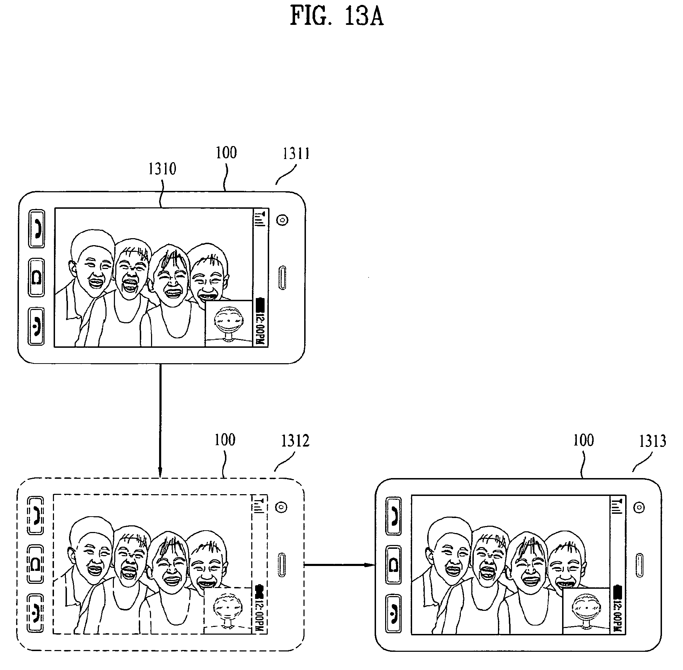

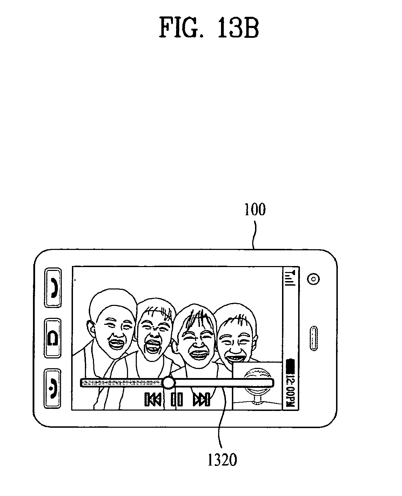

FIG. 13A and 13B are diagrams of one example for providing a function of recording or capturing an executed state conveniently to correspond to a motion in the course of a video call according to one embodiment of the present invention;

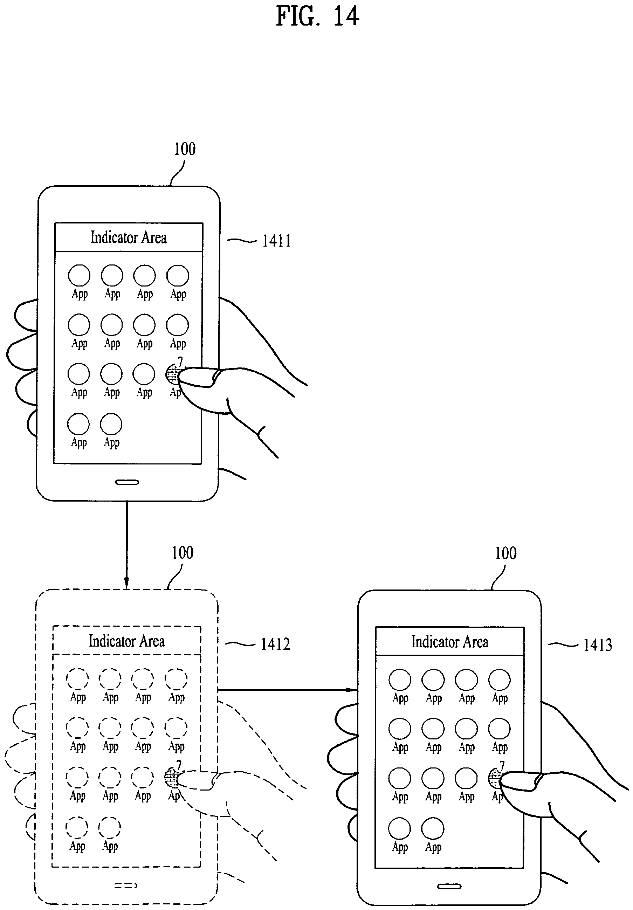

FIG. 14 is a diagram of one example for setting an automatic update function of a specific application to correspond to a motion according to one embodiment of the present invention; and

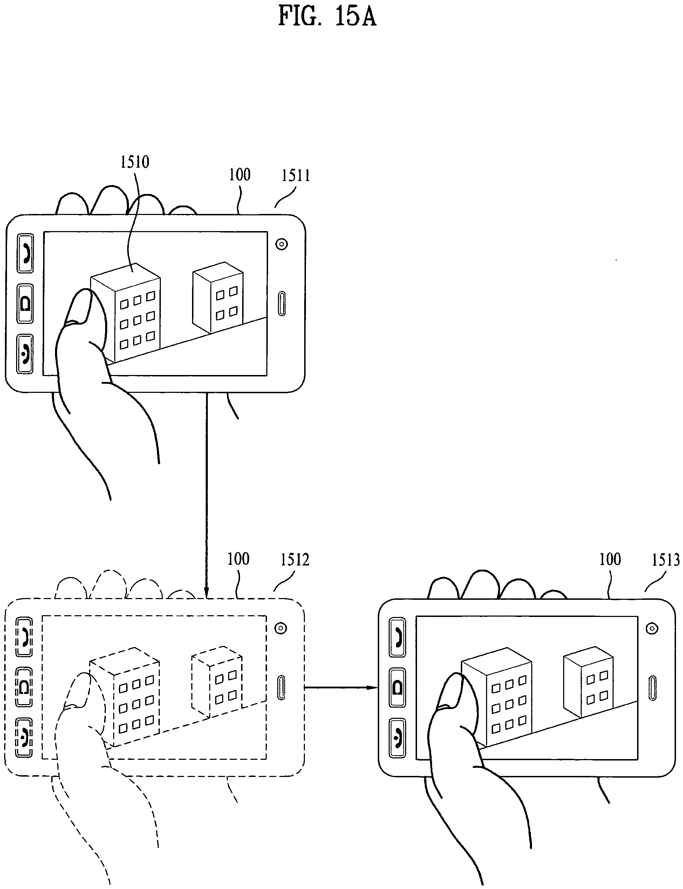

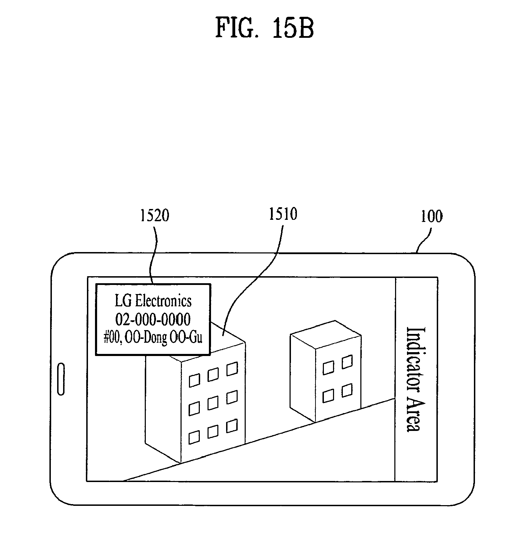

FIG. 15A and 15B are diagrams of one example for providing a function of facilitating a specific information to be viewed to correspond to a motion in an augmented reality according to one embodiment of the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are often used for elements in order to facilitate discussion of the disclosure. Therefore, significant meanings or roles are not given to the suffixes themselves and it is understood that the 'module', 'unit' and 'part' can be used together or interchangeably.

Various types of terminals may be implemented using the various techniques discussed herein. Examples of such terminals include mobile as well as stationary terminals, such as mobile phones, user equipment, smart phones, DTV, computers, digital broadcast terminals, personal digital assistants, portable multimedia players (PMPs), navigators, and the like. By way of non-limiting example only, further description will be with regard to a mobile terminal 100, and such teachings may apply equally to other types of terminals.

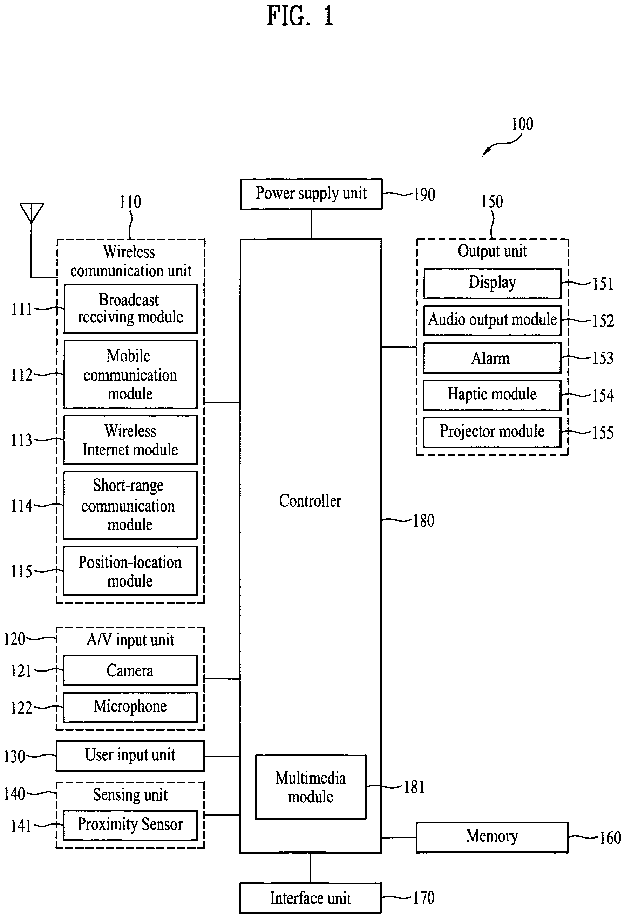

FIG. 1 is a block diagram of a mobile terminal 100 in accordance with an embodiment of the present invention. FIG. 1 shows the mobile terminal 100 having a wireless communication unit 110, an A/V (audio/video) input unit 120, a user input unit 130, a sensing unit 140, an output unit 150, a memory 160, an interface unit 170, a controller 180, a power supply unit 190, among other components. Mobile terminal 100 is shown having various components, but it is understood that implementing all of the illustrated components is not a requirement as greater or fewer components may alternatively be implemented.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115, and the like.

The broadcast receiving module 111 receives a broadcast signal and/or broadcast associated information from an external broadcast managing server via a broadcast channel. The broadcast channel may include a satellite channel and a terrestrial channel. The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. This broadcast associated information can also be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld

(DVB-H), the data broadcasting system known as media forward link only (MediaFLO®) and integrated services digital broadcast-terrestrial (ISDB-T). Optionally, the broadcast receiving module 111 can be configured to be suitable for other broadcasting systems as well as the above-identified digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceiving, among others.

The wireless internet module 113 supports Internet access for the mobile terminal 100. This module may be internally or externally coupled to the mobile terminal 100. In this case, the wireless Internet technology can include WLAN (Wireless LAN) (Wi-Fi), Wibro (Wireless broadband), Wimax (World Interoperability for Microwave Access), HSDPA(High Speed Downlink Packet Access), and the like.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Referring still to FIG. 1, the audio/video (A/V) input unit 120 is shown configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. Typically, the processed image frames can be displayed on the display 151.

The image frames processed by the camera 121 can be stored in the memory 160 or can be externally transmitted via the wireless communication unit 110. Optionally, two or more cameras 121 can be provided to the mobile terminal 100 according to the environment in which the terminal used to according to user needs.

The microphone 122 receives an external audio signal while the portable device is in a particular mode, such as phone call mode, recording mode and voice recognition mode. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, and the like.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100.

As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. If desired, the sensing unit 140 can include a proximity sensor 141.

Therefore, the sensing unit 140 generates a sensing signal by detecting one of motions in various shapes through a location change and a direction change of the mobile terminal 100. And, at least one function can be executed to correspond to the sensing signal in accordance with each of the motions. Moreover, the relation between the motion and the function executed through the corresponding motion can be saved in the memory unit.

And, the sensing unit 140 is able to sense whether a power is supplied by the power supply unit 190, whether an external device is connected to the interface unit 170, and the like. Besides, the sensing unit 140 can include a proximity sensor 141.

The output unit 150 generates outputs relevant to the senses of sight, hearing, touch and the like. In some cases, the output unit 150 includes the display 151, an audio output module 152, an alarm unit 153, a haptic module 154, a projector module 155, and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmissive type, which can be named a transparent display. As a representative example for the transparent display, there is TOLED (transparent OLED) or the like. A rear configuration of the display 151 can be implemented in the optical transmissive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body.

Alternatively, a plurality of displays can be arranged on different faces of the mobile terminal 100.

In the case where the display 151 and a sensor for detecting a touch action (hereinafter also referred to a 'touch sensor') configures a mutual layer structure (hereinafter also referred to a 'touchscreen'), the user can use the display 151 as an input device as well as an output device. In this case, the touch sensor can be configured as a touch film, a touch sheet, a touchpad or the like.

The touch sensor can be configured to convert a pressure applied to a specific portion of the display 151 or a variation of a capacitance generated from a specific portion of the display 151 to an electric input signal. Moreover, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know whether a prescribed portion of the display 151 is touched.

With continued reference to FIG. 1, a proximity sensor (not shown in the drawing) can be provided to an internal area of the mobile terminal 100 enclosed by the touchscreen or proximate to the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one or more of a transmissive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor, and the like. When the touchscreen includes the electrostatic capacity proximity sensor, it may also be configured to detect the proximity of a pointer using a variation of electric field according to the proximity of the pointer. In this scenario, the touchscreen (touch sensor) can be classified as a proximity sensor.

In the following description, for clarity, an action that a pointer approaches without contacting with the touchscreen to be recognized as located on the touchscreen is referred to as 'proximity touch' while an action that a pointer actually touches the touchscreen may be referred to as a 'contact touch'. The meaning of the position on the touchscreen proximity-touched by the pointer refers to the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state, etc.). In addition, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The projector module 155 is the element for performing an image projector function using the mobile terminal 100. And, the projector module 155 is able to display an image, which is identical to or partially different at least from the image displayed on the display 151, on an external screen or wall according to a control signal of the controller 180.

In particular, the projector module 155 can include a light source (not shown in the drawing) generating light (e.g., laser) for projecting an image externally, an image producing element (not shown in the drawing) for producing an image to output externally using the light generated from the light source, and a lens (not shown in the drawing) for enlarging the image for output externally at predetermined focus distance. The projector module 155 can further include a device (not shown in the drawing) for adjusting an image projected direction by mechanically moving the lens or the whole module.

The projector module 155 can be classified into a CRT (cathode ray tube) module, an LCD (liquid crystal display) module, a DLP (digital light processing) module or the like according to a device type of a display means. In particular, the DLP module is operated by the mechanism of enabling the light generated from the light source to reflect on a DMD (digital micro-mirror device) chip and can be advantageous for the downsizing of the projector module 151.

Preferably, the projector module 155 can be provided in a length direction of a lateral, front or backside direction of the mobile terminal 100. It is understood that the projector module 155 can be provided to any portion of the mobile terminal 100 according to the necessity thereof.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures, moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on the Internet.

Meanwhile, the sensing unit 140 is able to generate a sensing signal by detecting one of motions in various shapes through the location and direction changes of the mobile terminal 100. And, at least one function can be executed to correspond to the sensing signal in accordance with each of the motions. Moreover, the relation between the motion and the function executed through the corresponding motion can be saved in the memory unit 160.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identity Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component. Moreover, the controller 180 is able to perform a pattern recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such feature may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

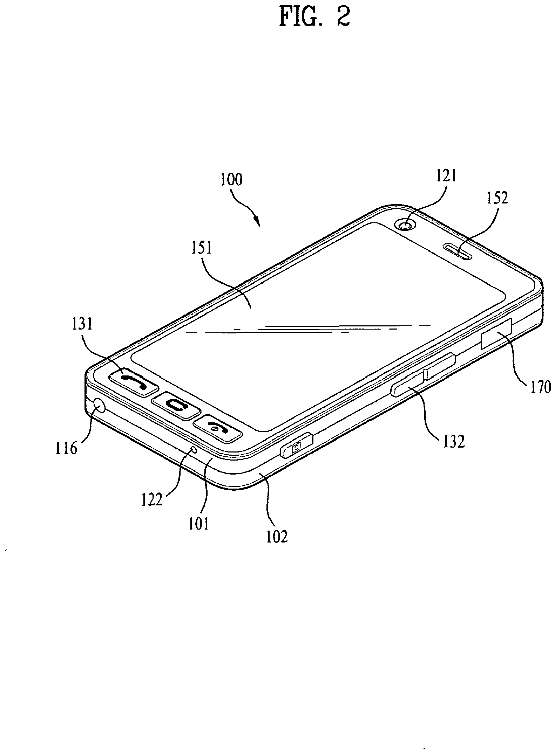

FIG. 2 is a front perspective diagram of a mobile terminal according to various embodiments of the present invention. The mobile terminal 100 is shown as a bar type terminal body, but the mobile terminal may alternative be implemented using other configuration such as folder-type, slide-type, rotational-type, swing-type, combinations thereof, and the like. For clarity, further disclosure will primarily relate to a bar-type mobile terminal 100, but such teachings apply equally to other types of mobile terminals.

Referring still to FIG. 2, the mobile terminal 100 includes a case (casing, housing, cover, etc.) configuring an exterior thereof. The case is shown divided into a front case 101 and a rear case 102. Various electric/electronic parts are positioned or otherwise located in a space or cavity provided between the front and rear cases 101 and 102. Optionally, at least one middle case can be further provided between the front and rear cases 101 and 102. The cases 101 and 102 may be formed by injection molding of synthetic resin or they can be formed of metal substance such as stainless steel (STS), titanium (Ti) or the like, for example.

A display 151, an audio output unit 152, a camera 121, user input units 130, a microphone 122, an interface 170 and the like can be provided to the terminal body, and more particularly, to the front case 101.

The display 151 is shown occupying the majority of a main face of the front case 101. The audio output unit 151 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 is manipulated to receive a command for controlling an operation of the terminal 100. The input unit 130 may also include a plurality of manipulating units 131 and 132. The manipulating units 131 and 132 will sometimes be referred to herein as a manipulating portion and they may implement any mechanism of a tactile manner that enables a user to perform a manipulation action by experiencing a tactile feeling.

Content inputted by the first or second manipulating unit 131 or 132 can be diversely set. For instance, such a command as start, end, scroll and the like is inputted to the first manipulating unit 131. A command for volume adjustment of sound outputted from the audio output unit 152, a command for switching to a touch recognizing mode of the display 151 or the like can be input to the second manipulating unit 132.

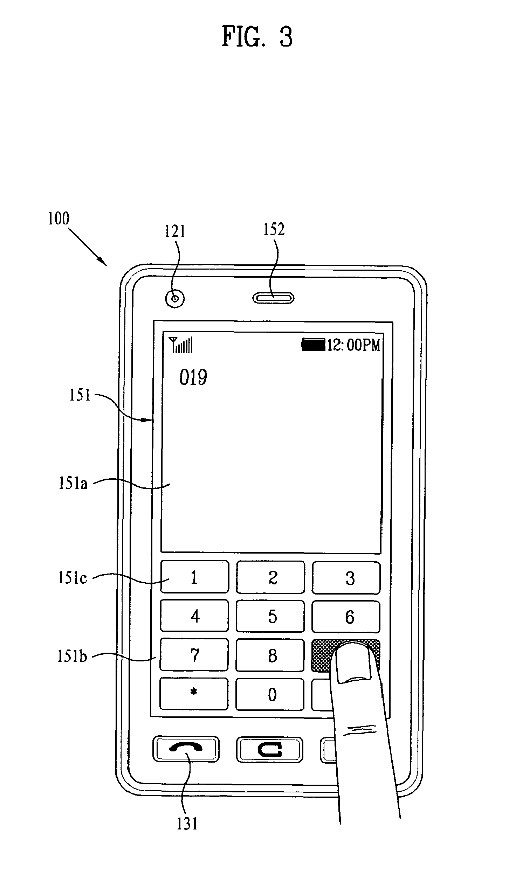

Interconnected operational mechanism between the display 151 and the touchpad 135 are explained with reference to FIG. 3 as follows.

FIG. 3 is a front-view of terminal 100 according to various embodiment of the present invention. Various kinds of visual information can be displayed on the display 151. Such information can be displayed in characters, numerals, symbols, graphics, icons and the like. In order to input the information, at least one of the characters, numerals, symbols, graphics and icons are represented as a single predetermined array to be implemented in a keypad formation. This keypad formation is also referred to as 'soft keys'.

FIG. 3 shows that a touch applied to a soft key is input through a front face of a terminal body. The display 151 is operable through an entire area or by being divided into a plurality of regions. In the latter case, a plurality of the regions can be configured interoperable. For instance, an output window 151a and an input window 151b are displayed on the display 151. A soft key 151c representing a digit for inputting a phone number or the like is outputted to the input window 151b. If the soft key 151c is touched, a digit corresponding to the touched soft key is output to the output window 151a. If the first manipulating unit 131 is manipulated, a call connection for the phone number displayed on the output window 151a is attempted.

In addition, the display 151 or the touchpad 135 can be configured to receive a touch input by scroll. A user scrolls the display 151 or the touchpad 135 to shift a cursor or pointer located at an entity (e.g., icon or the like) displayed on the display 151. Furthermore, in case that a finger is shifted on the display 151 or the touchpad 135, a path of the shifted finger can be visually displayed on the display 151. This may be useful in editing an image displayed on the display 151.

Consider the scenario in which both the display (touch screen) 151 and the touchpad 135 are touched together within a predetermined or threshold time range, thus causing one function of the terminal can be executed. This simultaneous touch example may correspond to a case that the terminal body is held by a user using a thumb and a first finger (clamping). The above function can include activation or deactivation for the display 151 or the touchpad 135.

For clarity and convenience of the following description, assume that a mobile terminal 100 mentioned in the following description includes at least one of the components shown in FIG. 1.

Moreover, assume that the display 151 of the present invention is a touchscreen.

Generally, a graphic of an arrow or finger shape for pointing at a specific object or selecting a menu on the display unit is called a pointer or a cursor. Yet, the pointer frequently means such a device for a touch manipulation as a finger, a stylus pen and the like.

In order to clearly discriminate the pointer and the cursor from each other, a graphic displayed on the display 151 shall be named a cursor, while such a physical means for performing a touch, a proximity touch or a gesture as a finger and a stylus pen shall be named a pointer.

According to a related art, in case that a user attempts to set a prescribed function in one of a plurality of applications provided to a terminal, a method of setting an individual function by executing a setting menu separately is utilized.

Recently, as a terminal equipped with a user interface capable of running an application using an icon displayed on a display unit is propagating in general, a user can be provided with more applications of various types. In this case, if a function frequently used by a user is set in an application through a motion previously set in the terminal, the user can be provided with convenience.

Therefore, the present invention is able to provide a following method. First of all, at least one function corresponding to each different motion sensed by a sensing unit is designated in advance. Secondly, while a prescribed icon is selected, if a prescribed motion is detected, a function corresponding to the detected motion can be easily set in an application corresponding to a selected icon.

The above method according to the present invention is described in detail as follows.

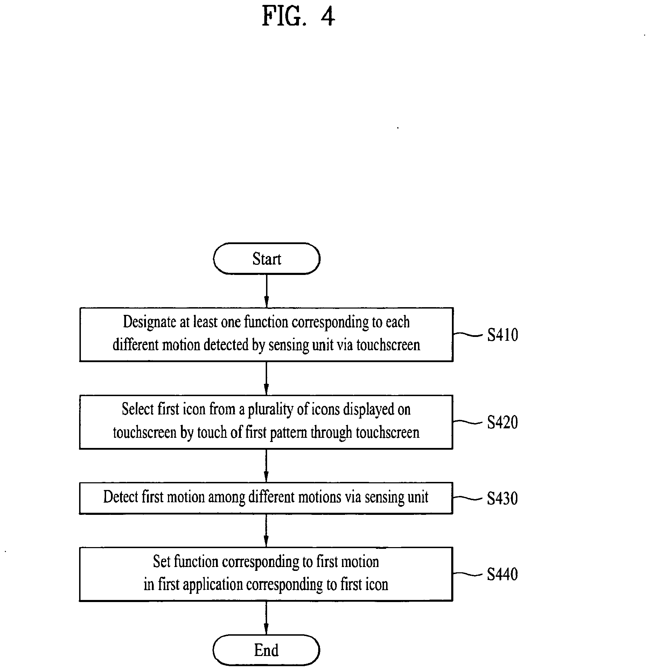

FIG. 4 is a flowchart of one example for setting a side function in an application conveniently through a preset motion according to one embodiment of the present invention.

Referring to FIG. 4, at least one function corresponding to each of different motions detected via the sensing unit can be designated via the touchscreen [S410].

A shape of a motion detectible via the sensing unit is non-limited.

A user is able to arbitrarily designate a shape of a motion to one of a straight line, a curved line, a combination of straight and curved lines and the like.

At least one function corresponding to each motion can include a lock function, a notification function, a setting menu entry function, a location service function and the like. Moreover, the at least one function can further include a lock function, a hide function, a mute function, a protection function for preventing a random deletion or change by a user, a background function for residing in a memory as a background instead of being completely terminated despite a command for terminating a corresponding application, an automatic update activation/deactivation function, a recording function of recording or capturing a running state of a corresponding application and the like.

Table 1 shows one representative example of setting the lock function, the notification function, the setting menu entry function and the location service function to correspond to specific motions, respectively, among the above-enumerated exemplary functions.

**[Table 1]**

| Function | Preset motion |
|---|---|
| Lock function | L |
| Notification function | N |
| Setting menu entry function | S |
| Location service function | G |

Yet, if the at least one function is designated to each of the different motions, it can be set in advance by a manufacturer or can be randomly set by a user. Moreover, a user may change a function corresponding to a previously designated motion.

After the at least one function corresponding to each of the different motions has been designated, a prescribed icon can be selected from a plurality of icons displayed on the touchscreen by a touch having a specific pattern via the touchscreen [S420].

In doing so, a touch input having a specific pattern can include one of a long touch input, a proximity touch input, a long-proximity touch input, a double touch input and the like.

For clarity and convenience of the following description, a touch input having a specific pattern shall be named a first touch input and an icon selected by the touch input having the first pattern shall be named a first icon.

A first icon is selected through a touch input having a first pattern and a prescribed motion among a plurality of the preset motions can be detected via the sensing unit [S430].

If the prescribed motion is detected via the sensing unit, the controller 180 sets a function, which is stored in the memory by corresponding to the detected motion, in an application corresponding to the first icon [S440].

Therefore, a user is able to conveniently set a side function in an application through a preset motion, thereby being provided with convenience.

For clarity and convenience of the following description, a motion detected via the sensing unit shall be named a first motion and an application corresponding to a first icon shall be named a first application.

In this case, after a specific icon has been designated, when the specific icon is selected as a touch input having a first pattern, if a first motion is selected, it is able to set a function corresponding to the first motion in all applications corresponding to all icons. The specific icon is able to include an icon corresponding to a setting menu or the like. For clarity and convenience of the following description, a specific icon for setting a function corresponding to a first motion in all applications shall be named a second icon.

Moreover, if a first icon having a function set therein through a prescribed motion is selected by a touch input having a specific pattern discriminated from a touch input having a first pattern, the controller 180 is able to cancel the function set in the first application corresponding to the first icon.

In this case, a touch input for canceling a function can include one of a long touch input, a proximity touch input, a long-proximity touch input, a double touch input and the like. In particular, in order to be discriminated from the touch input having the first pattern, the touch input for canceling the function should be a touch input that is not designated to the touch input having the first pattern. For clarity and convenience of the following description, a touch input for canceling a function shall be named a touch input having a second pattern. In particular, if a touch having a second pattern is inputted to a second icon, a function set in all applications can be canceled.

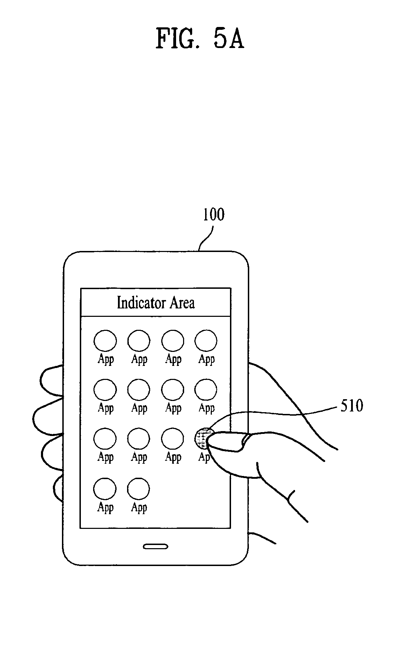

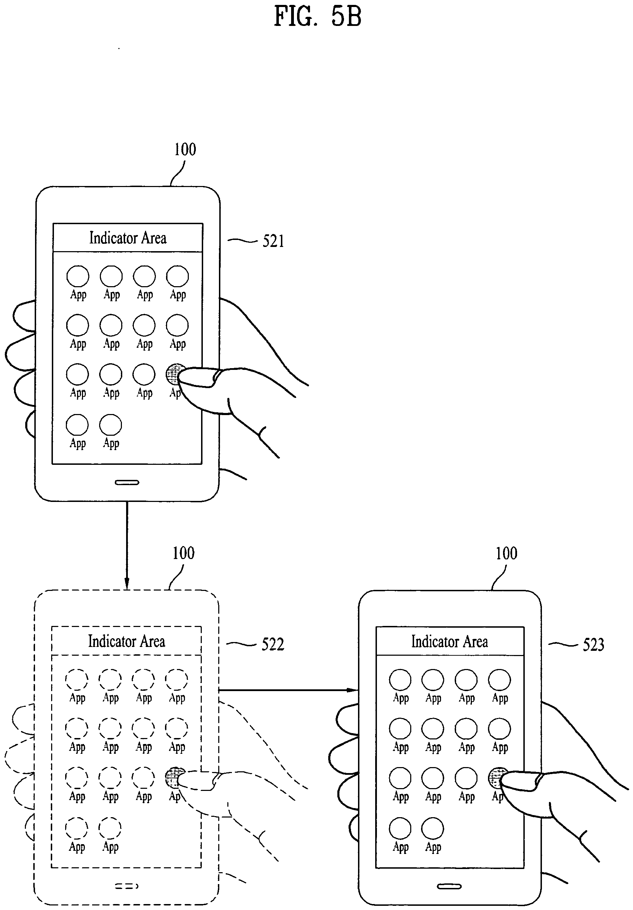

In the following description, one detailed example of the present invention shall be explained with reference to FIG. 5A and 5B.

FIG. 5A and 5B are diagrams of one example for setting a side function in an application conveniently through a preset motion according to one embodiment of the present invention.

In FIG. 5A and 5B, assume that a lock function is designated in advance to be set to corresponding to a motion of an L shape. And, assume that a touch input having a first pattern is a long touch.

Referring to FIG. 5A, it is able to select a first icon 510 through a long touch.

After the first icon 510 has been selected through the long touch, referring to FIG. 5B, a user is able to input a motion of an L shape in a manner of changing a position of a terminal into '523' from '521' via '522' in order.

If the sensing unit detects the motion of the L shape, the controller 180 sets a lock function in a first application corresponding to the first icon 510.

Therefore, the user is facilitated to set the lock function in the first application through the motion of the L shape.

Moreover, according to one embodiment of the present invention, a user is able to set a preset function through a first motion by selecting a plurality of icons.

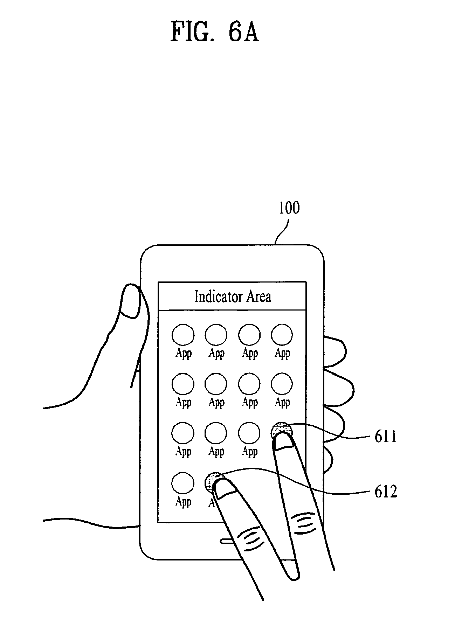

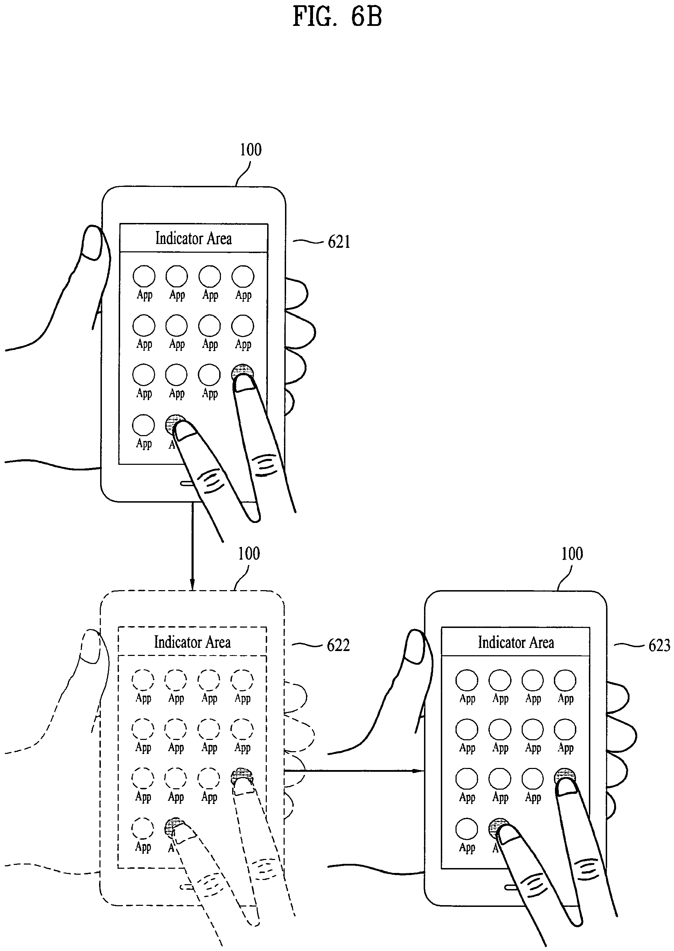

This is described with reference to FIG. 6A and 6B as follows.

FIG. 6A and 6B are diagrams of one example for setting a side function in a plurality of applications simultaneously and conveniently through a preset motion according to one embodiment of the present invention.

For clarity and convenience, the former assumptions of FIG. 5A and 5B are exactly applied to FIG. 6A and 6B.

Referring to FIG. 6A, a user is able to select a plurality of first icons 611 and 612 through a long touch.

After a plurality of the first icons 611 and 612 have been selected through the long touch, referring to FIG. 6B, a user is able to input a motion of an L shape in a manner of changing a position of a terminal into '623' from '621' via '622' in order.

If the sensing unit detects the motion of the L shape, the controller 180 sets a lock function in a plurality of first applications corresponding to a plurality of the first icons 611 and 612.

Therefore, the user is facilitated to set the lock function in a plurality of the first applications through the motion of the L shape.

Meanwhile, according to one embodiment of the present invention, a user is able to set a plurality of functions in a first icon through a plurality of first motions.

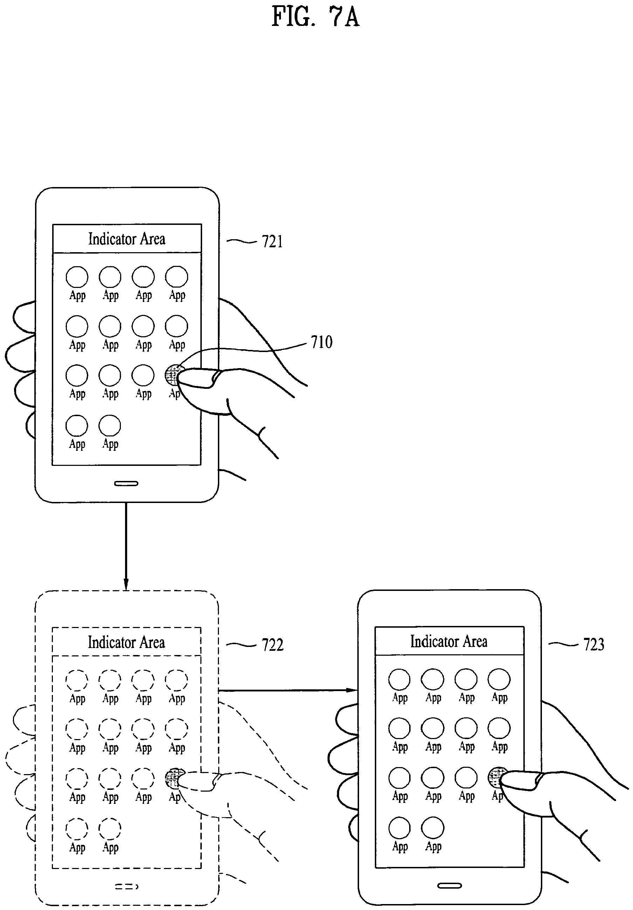

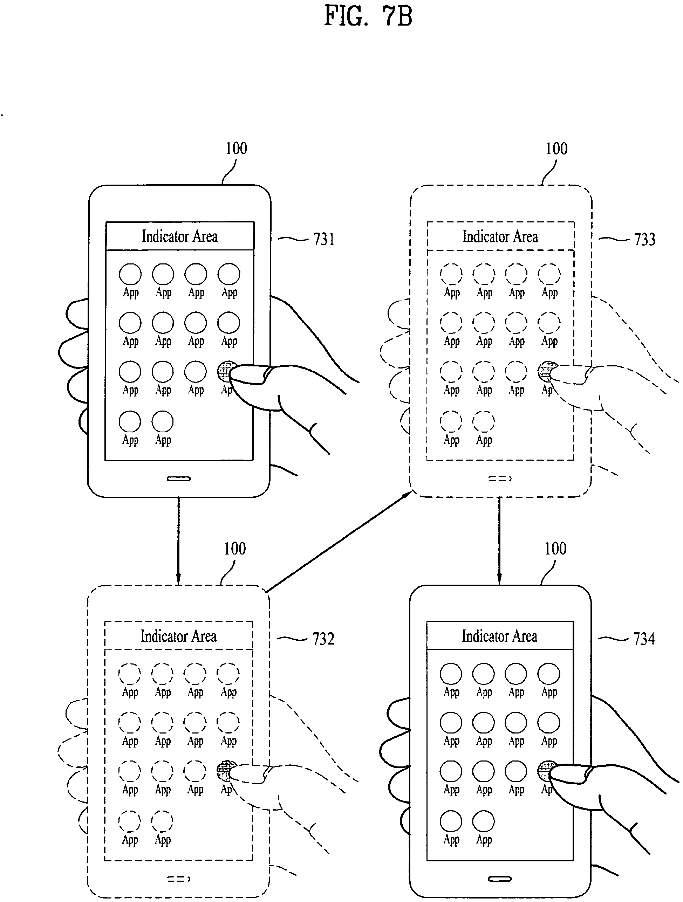

This is described with reference to FIG. 7A and 7B as follows.

FIG. 7A and 7B are diagrams of one example for setting a plurality of side functions in an application conveniently through a plurality of preset motions according to one embodiment of the present invention.

For clarity and convenience, the former assumptions of FIG. 5A and 5B are exactly applied to FIG. 7A and 7B.

Moreover, in FIG. 7A and 7B, assume that a notification function is designated in advance to be set corresponding to a motion of an N shape.

Referring to FIG. 7A, after a first icon 710 has been selected through a long touch, a user is able to input a motion of an L shape in a manner of changing a position of a terminal into '723' from '721' via '722' in order.

Subsequently, while the first icon 710 is selected through the long touch, a user is able to input a motion of an N shape in a manner of changing a position of the terminal into '734' through '731, '732" and '723' in order.

If the sensing unit detects the motion of the L shape and the motion of the N shape, the controller 180 sets a lock function and a notification function in a first application corresponding to the first icon 710.

Therefore, the user is facilitated to set a plurality of functions in the first application through the motion of the L shape and the motion of the N shape, thereby being provided with convenience.

Meanwhile, according to another embodiment of the present invention, if a first icon is selected through a touch having a first pattern, it is able to display a visual effect to indicate that at least one function is provided to correspond to each different motion detected by the sensing unit.

In this case, the visual effect plays a role as an indicator to enable a user to recognize that at least one function is provided in a manner of corresponding to each different motion detected by the sensing unit.

This visual effect can be implemented through various effects including a color, a pattern of a surface texture, a flickering, a size change, a shape change of at least one portion and the like. Yet, the visual effect is non-limited by the above effects and can be further implemented with more various effects.

The visual effect is set to be displayed only while a user performs a touch input having a first pattern. Alternatively, the visual effect can be displayed for a predetermined period of time after a touch input having a first pattern has been performed. Alternatively, whenever a touch having a first pattern is made by toggling, a visual effect can be implemented in a manner of being turned on/off.

Yet, the above descriptions of the visual effect are exemplary. Optionally, a time for duration of the first visual effect can be set in various ways. For example, the time for the duration of the first visual effect can be changed in a manner of being randomly changed by a user through a setting menu.

The above-described visual effect can play a role as an indicator that indicates a shape of a pattern previously set in the terminal. For instance, if a motion of an L shape, a motion of an N shape and a motion of an S shape are set in the terminal, the controller 180 is able to display an indicator on a prescribed area of the touchscreen to indicate the motions of the their kinds of the shapes.

In this case, if a first icon is dratted to an area of the visual effect indicated by the indicator, a preset function can be executed as well. Yet, if a space is insufficient due to a threshold distance between icons, the visual effect can play a role as an indicator that indicates a shape of a preset motion only.

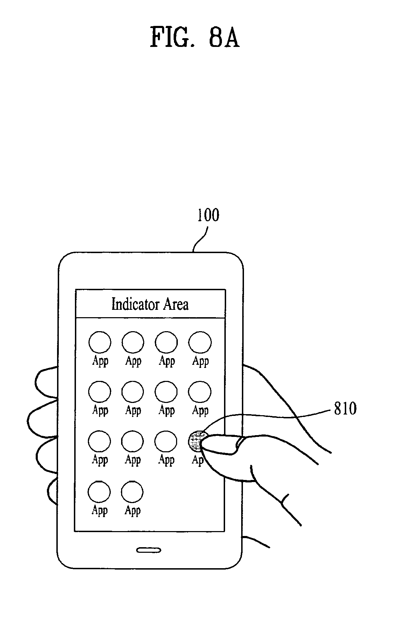

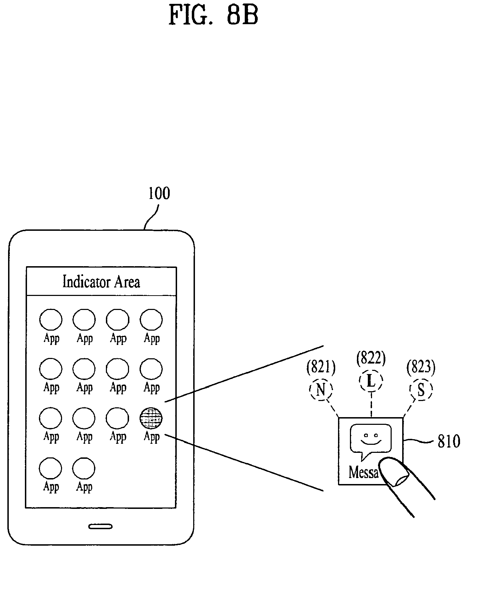

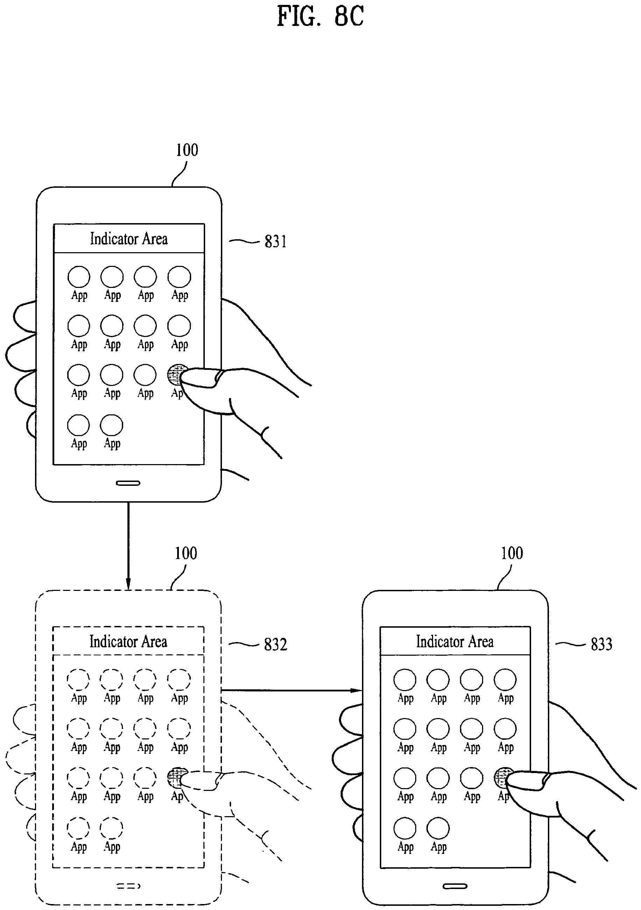

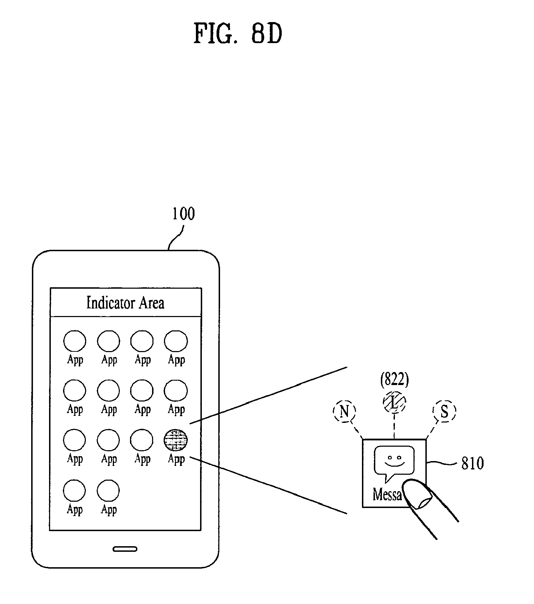

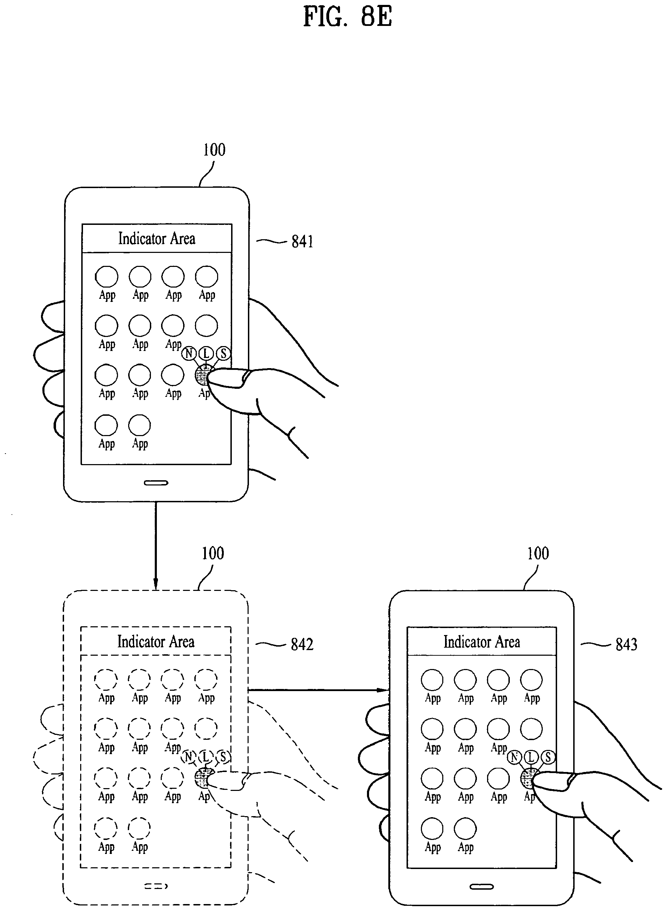

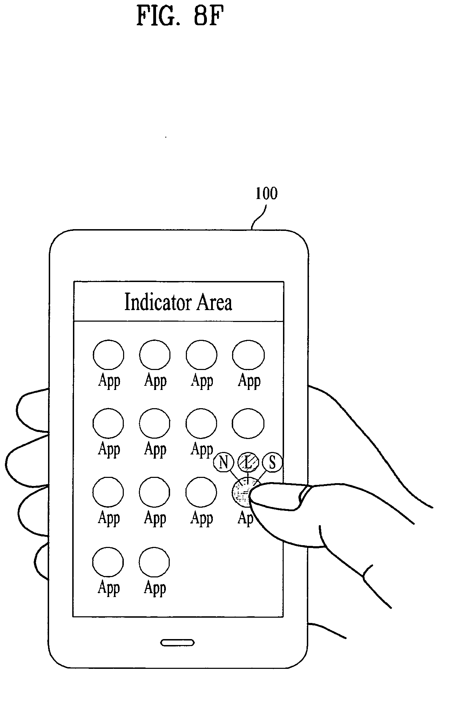

FIG. 8A, 8B, 8C, 8D, 8E and 8F are diagrams of one example for displaying a visual effect to indicate that a plurality of functions corresponding to a preset motion are provided to a user according to one embodiment of the present invention.

For clarity and convenience, the former assumptions of FIG. 7A and 7B are exactly applied to FIG. 8A, 8B, 8C, 8D, 8E and 8F. Moreover, assume that a setting menu entry function is designated in advance to be set to correspond to a motion of an S shape.

Referring to FIG. 8A, a first icon 810 can be selected through a long touch.

If the first icon 810 is selected through a long touch, referring to FIG. 8B, the controller 180 is able to visually display that a function can be set in a first application to correspond to a motion. In FIG. 8B, a user is informed that a notification function(N), a lock function(L) and a setting menu entry function(S) will be provided, using a first visual effect 821, a second visual effect 822 and a third visual effect 823, respectively.

In doing so, referring to FIG. 8C, a user is able to input a motion of an L shape in a manner of changing a position of a terminal into '833' from '821' via '822' in order. If the sensing unit detects the motion of the L shape, the controller 180 sets a lock function in a first application corresponding to the first icon 810.

Subsequently, if the first icon 810 is selected again through a long touch, referring to Fig. 8D, the second visual effect 822 corresponding to the lock function already set through the motion can be displayed in a manner of being discriminated from the display before the setting.

Substantially, the first visual effect 821, the second visual effect 822 and the third visual effect 823 can be displayed as shown in FIG. 8E and FIG. 8F.

In particular, if the first icon 810 is selected by a long touch and a motion of L shape is inputted [FIG. 8E], the second visual effect 822 corresponding to a set lock function will be displayed in a manner of being distinguished from a state before the setting [FIG. 8F].

Moreover, according to another embodiment of the present invention, a user can be provided with a function of changing at least one function corresponding to each motion or a function of displaying a menu for adding at least one motion corresponding to at least one function.

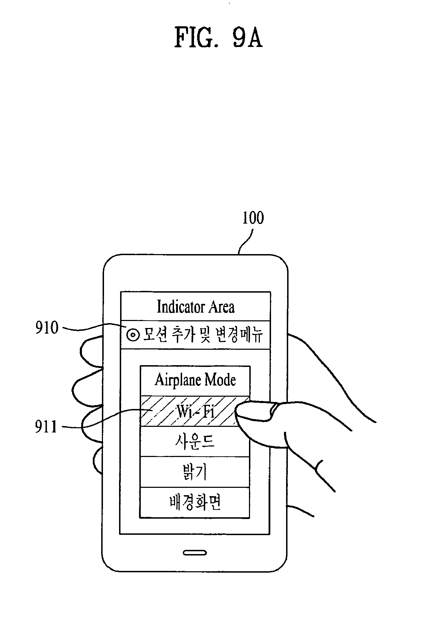

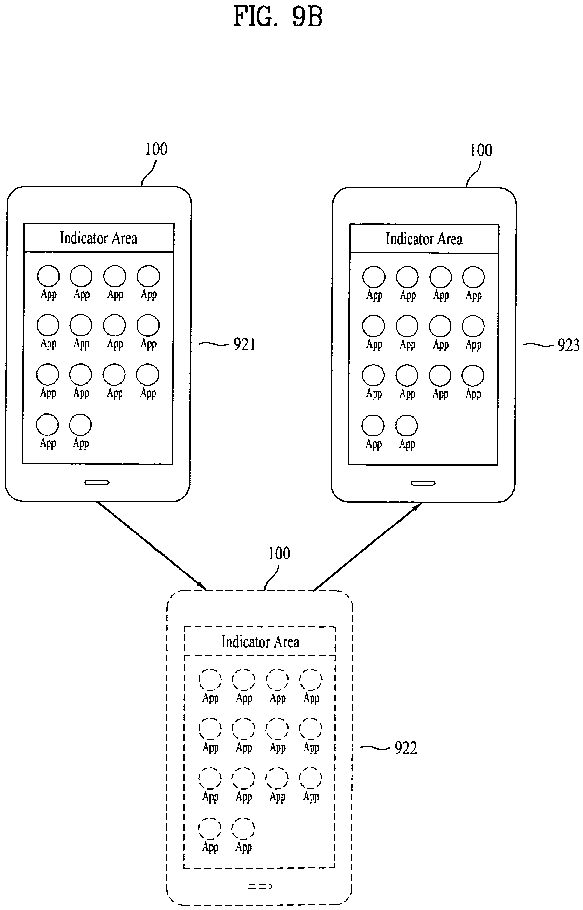

This is described in detail with reference to FIG. 9A and 9B as follows.

FIG. 9A and 9B is a diagram of one example for displaying a menu for changing or adding a function corresponding to a motion according to one embodiment of the present invention.

Referring to FIG. 9A, a user is able to execute a motion adding and changing menu 910 through a separate menu execution or a bookmark (favorites) menu execution or the like.

If the motion adding and changing menu 910 is executed, addible functions including 'Airplane Mode setting function', 'Wi-Fi setting function', 'Sound Adjusting function', 'Brightness Adjusting function', 'Background image managing function' and the like can be displayed as a list on a touch screen.

The user is able to touch and select the Wi-Fi setting function 911 from the displayed list.

Subsequently, referring to FIG. 9B, a user is able to input a motion of a V shape in a manner of changing a position of a terminal into '923' from '921' via '922' in order.

If the sensing unit detects the motion of the V shape, the controller 180 controls the Wi-Fi setting function 911 to be given to a first application to correspond to the motion of the V shape.

Although FIG. 9A and 9B show the example of adding a new motion only, it may be possible to change a function corresponding to a previously set motion.

Meanwhile, according to another embodiment of the present invention, it is able to provide a function of using a motion of a terminal in case of inputting a character in the terminal.

In particular, if the sensing unit detects a motion of the terminal, it is able to provide a function of inputting a character corresponding to the detected motion.

In this case, the character inputtable via the motion can include one of English alphabets, Korean alphabets, numerals, other characters and the like.

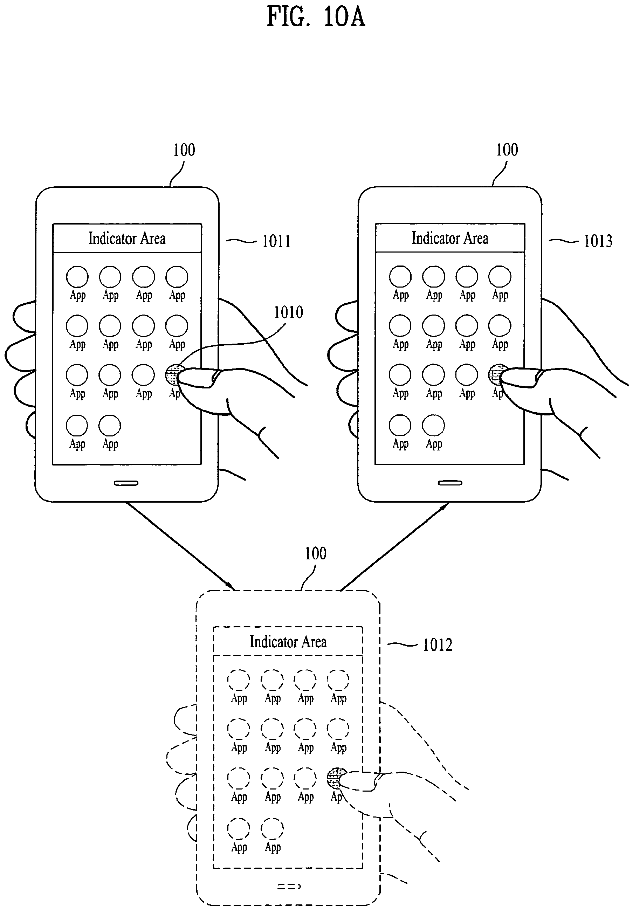

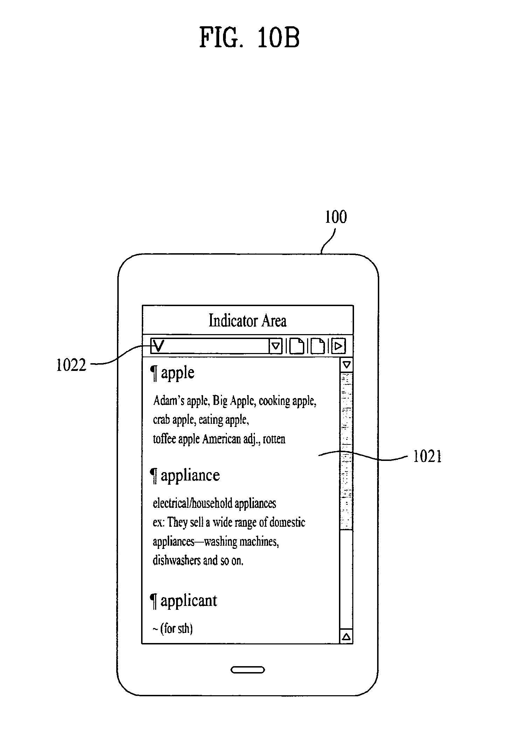

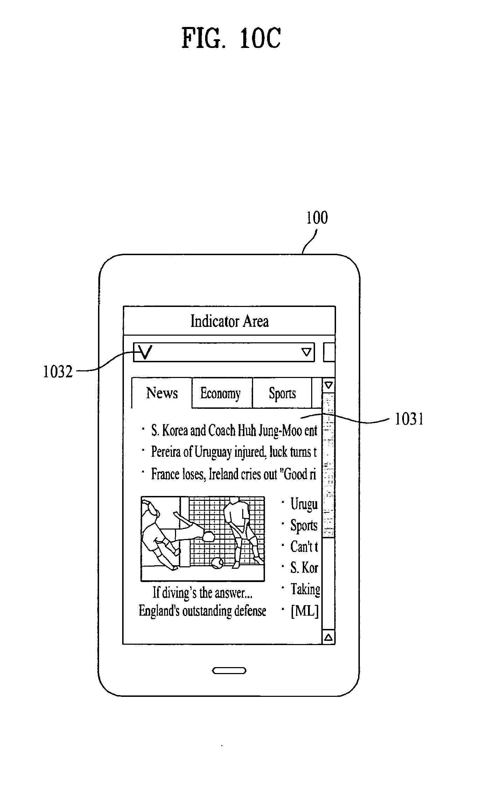

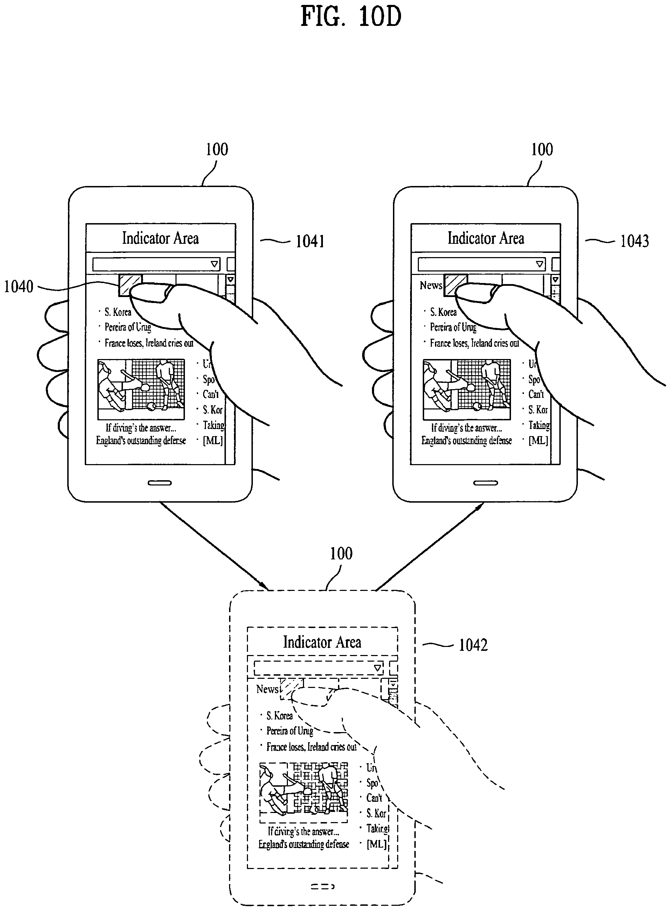

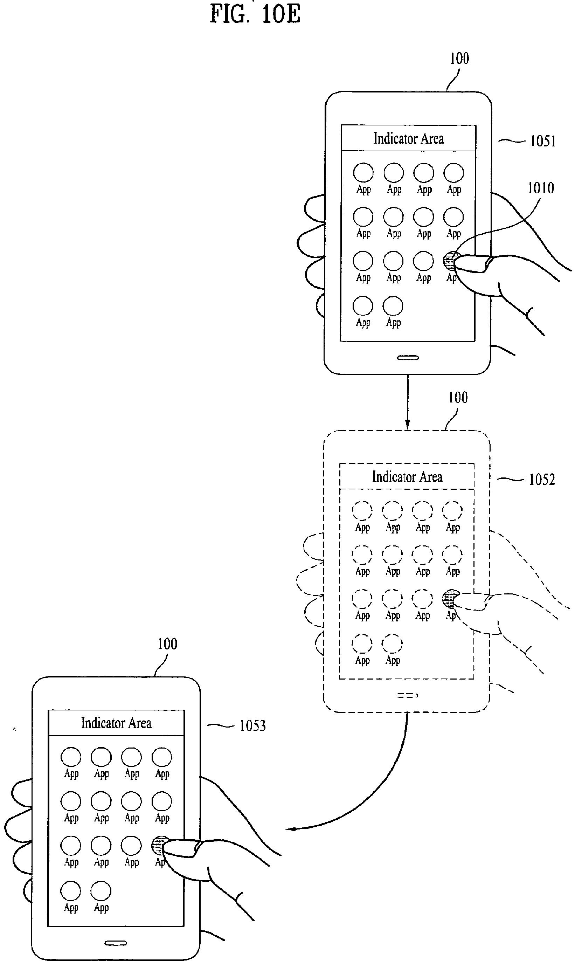

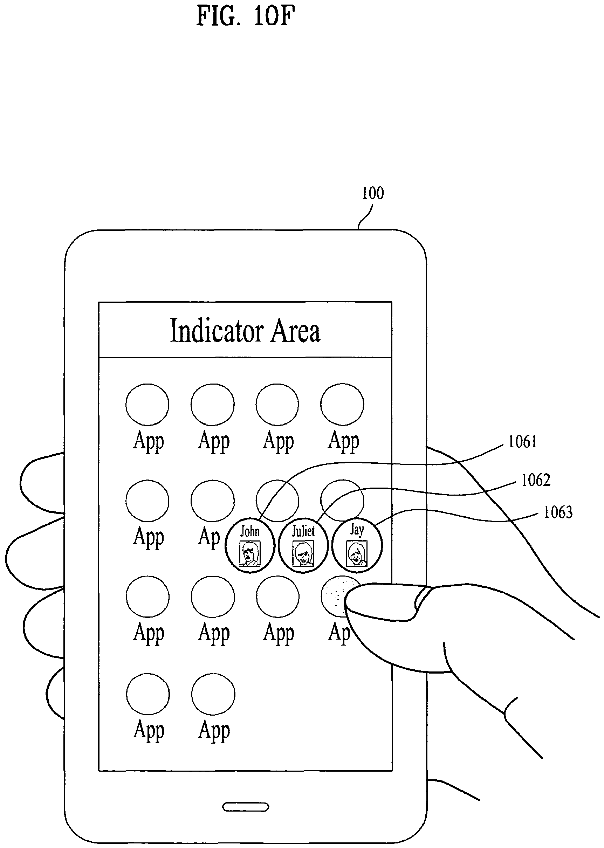

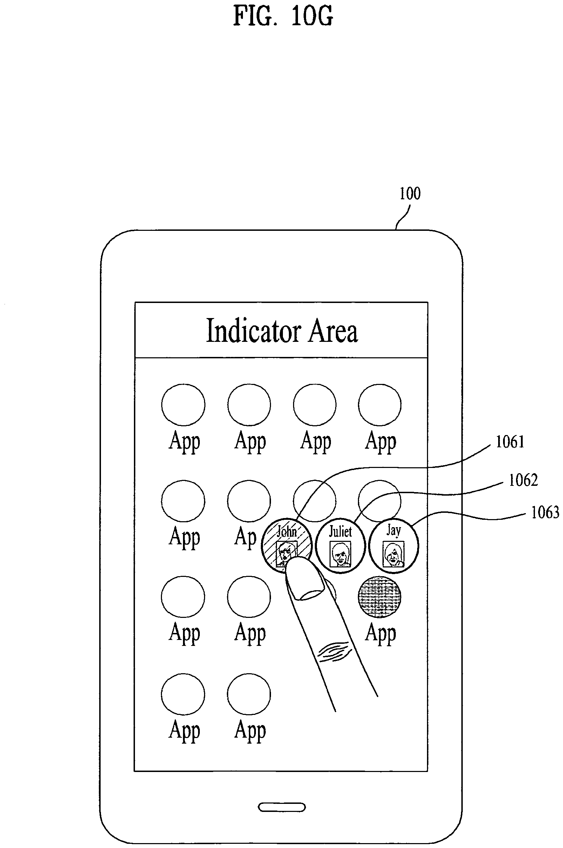

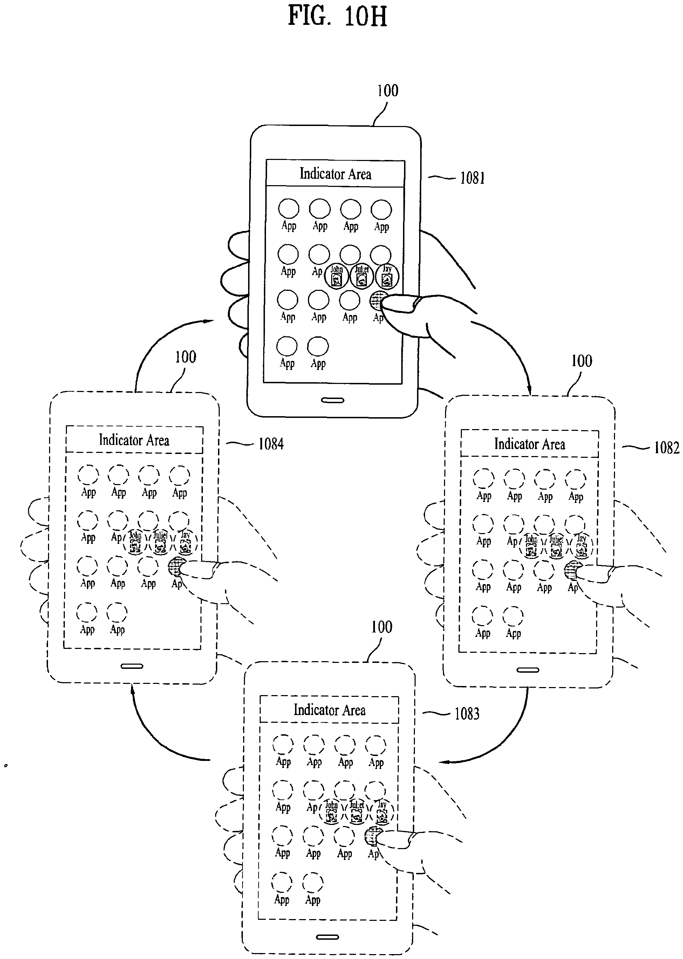

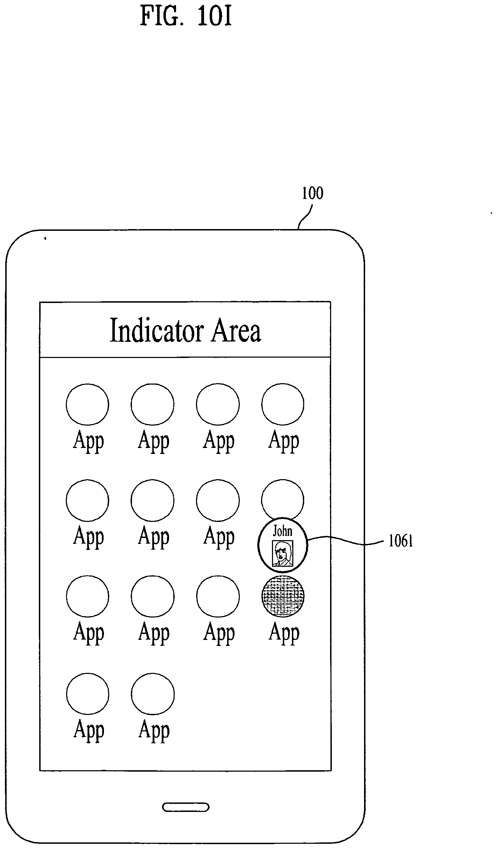

This is described in detail with reference to FIG. 10A, 10B, 10C, 10D, 10E, 10F, 10G, 10H and 10I as follows.

FIG. 10A, 10B, 10C, 10D, 10E, 10F, 10G, 10H and 10I are diagrams of one example for inputting a character to correspond to a motion of a terminal according to one embodiment of the present invention.

In FIG. 10A, 10B, 10C, 10D, 10E, 10F, 10G, 10H and 10I, assume that a touch input having a first pattern includes a long touch.

Referring to FIG. 10A, a first icon 101 can be selected through a long touch.

After the first icon 101 has been selected through the long touch, a user is able to input a motion of a V shape in a manner of changing a position of a terminal into '1013' through '1011' and '1012' in order.

If the sensing unit detects the motion of the V shape, the controller 180 inputs a character V by executing a first application corresponding to the first icon 1010.

If the first application is a dictionary application 1021, as shown in FIG. 10B, the controller 180 executes the dictionary application 1021 and then controls a character V 1022 to be input to a search window.

If the first application is a website application 1031, as shown in FIG. 10C, the controller 180 executes the website application 1031 and then controls a character V 1032 to be input to a search window.

Moreover, while the website application 1031 is executed, it is possible to input a character via a motion by selecting a separate menu.

Referring to FIG. 10D, while the website application 1031 is executed, the user selects a person search menu 1040 through a long touch to a first icon and is then able to input a motion of a V shape to the person search menu of a corresponding website in a manner of changing a position of a terminal into '1043' from '1041' via '1042' in order.

Meanwhile, it is able to provide a function of facilitating a search for a specific third party from phone numbers saved in a terminal and enabling a call using a character input.

This is described with reference to FIGs. 10E to 10I as follows.

Referring to FIG. 10E, a first application corresponding to a first icon 1010 is a phonebook application. After the first icon 101 has been selected by a long touch, a user changes a position of a terminal to input a motion of J shape.

In this case, a plurality of candidate groups, in which names starting with character J among a plurality of contacts saved in a phonebook are contained, are displayed on a prescribed region of a touchscreen. In particular, referring to FIG. 10F, names and photos of John 1061, Juliet 1062 and Jay 1063, each of which starts with J, can be displayed. In doing so, phone numbers of the enumerated John 1061, Juliet 1062 and Jay 1063 can be displayed together.

If a plurality of the candidate groups are displayed, referring to FIG. 10G, a user selects a prescribed candidate 1061 and is then able to try a call connection.

Moreover, while a plurality of the candidate groups are displayed, the user is able to input another motion. Referring to FIG. 10H, it is able to input a motion of O shape by changing a position of the terminal.

If the motion of the O shape is input, referring to FIG. 10I, the John 1061 having a name containing a character O next to the character J is automatically selected and a call connection can be then tried.

Therefore, the user is facilitated to perform a search and the like by inputting a character through the motion of the terminal, thereby being provided with convenience.

Moreover, according to another embodiment of the present invention, a zoom-in function can be provided to correspond to a motion in a camera mode.

FIG. 11A and 11B are diagrams of one example for setting a zoom-in function conveniently to correspond to a motion in a camera mode according to one embodiment of the present invention.

In FIG. 11A and 11B, assume that a zoom-in function is designated in advance to be set to correspond to a motion of an L shape.

Referring to FIG. 11A, a user is able to input a motion of an L shape in a manner of changing a position of a terminal into '1113' from '1111' via '1112' in order in a camera mode in which an image 1110 inputted via a camera is displayed.

If the sensing unit detects the motion of the L shape, the controller 180 executes the zoom-in function to correspond to the motion of the L shape, whereby a zoom-in image 1120, as shown in FIG. 11B, is displayed on the touchscreen.

Therefore, the user is facilitated to execute the zoom-in function through a simple motion in the camera mode.

Meanwhile, according to another embodiment of the present invention, a function of facilitating a photo view mode setting of a thumbnail type to correspond to a motion in a photo view mode.

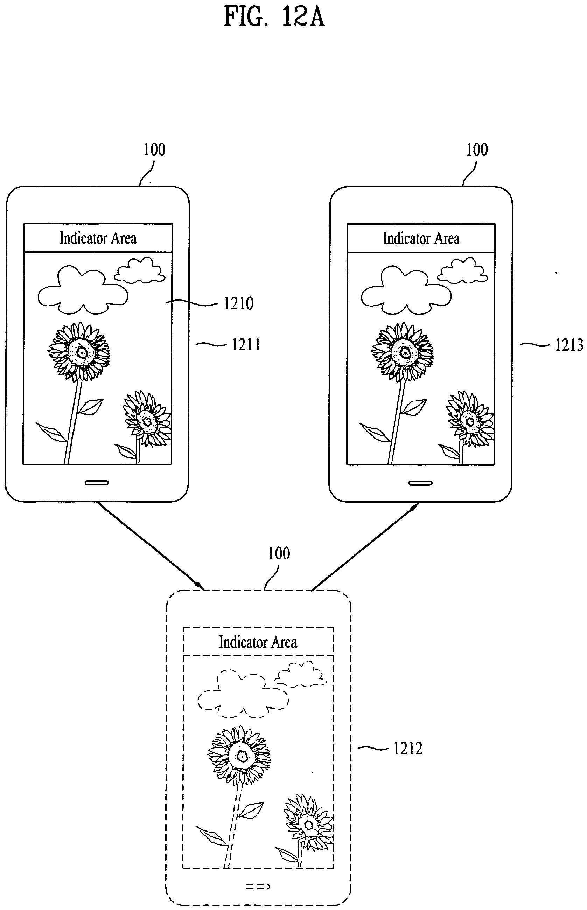

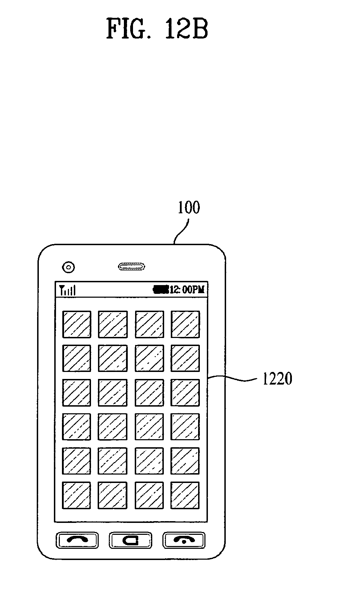

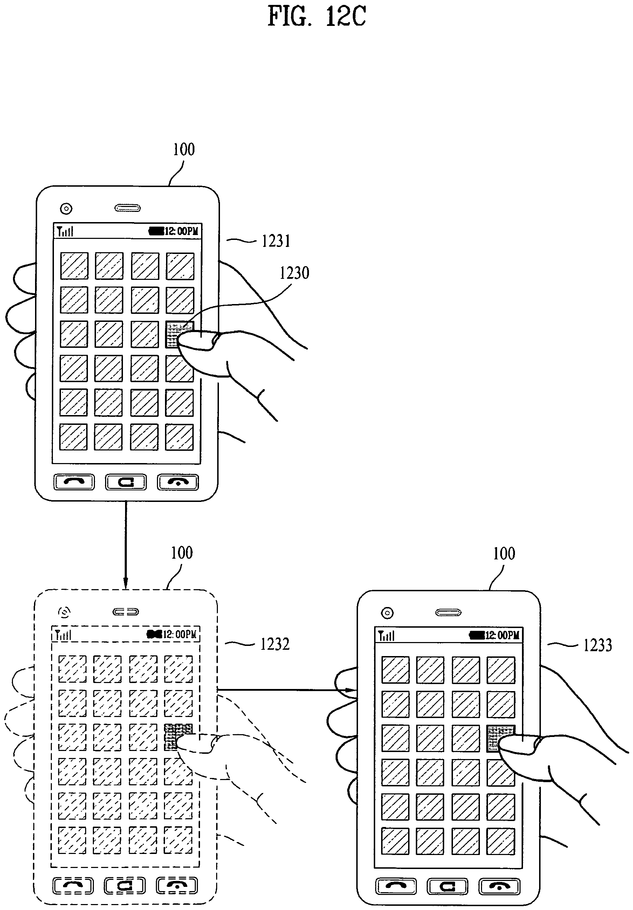

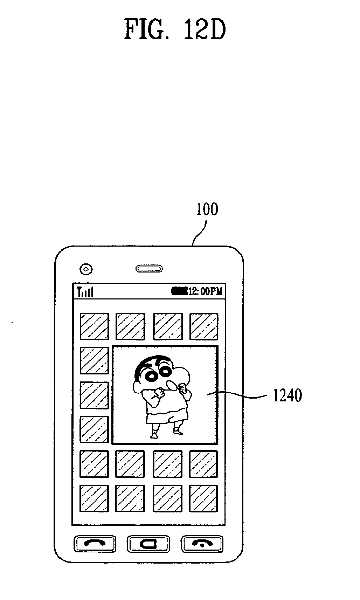

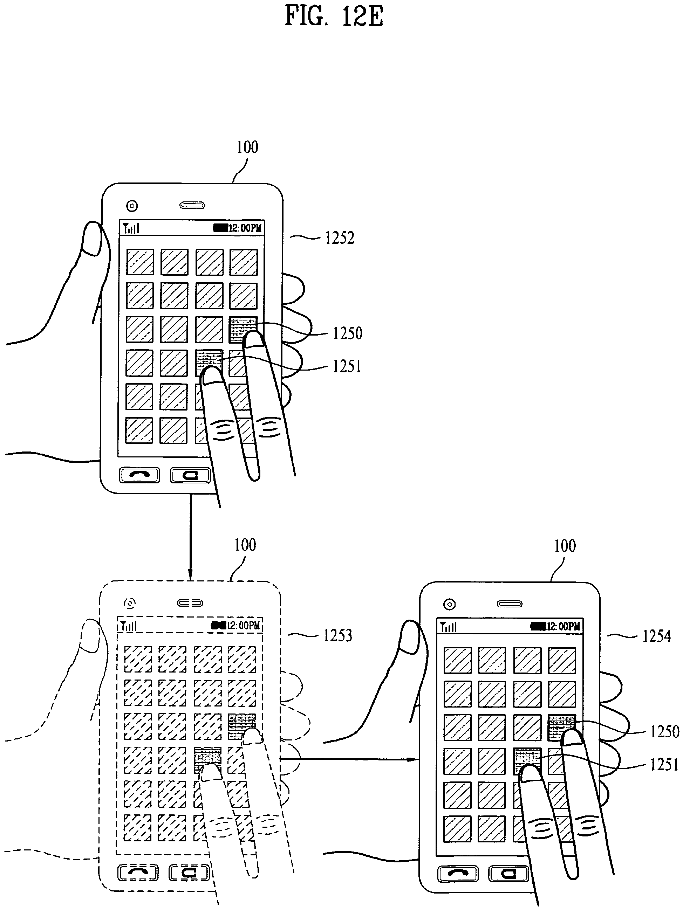

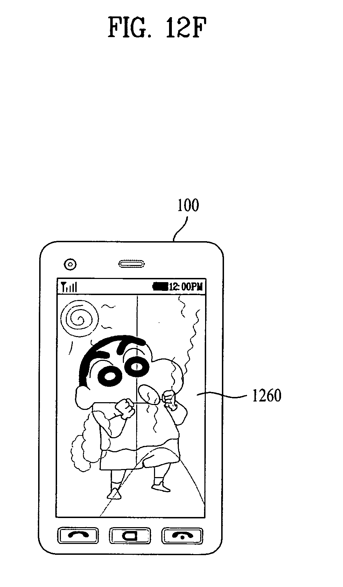

FIG. 12A, 12B, 12C, 12D, 12E and 12F are diagrams of one example for facilitating a photo view mode setting of a thumbnail type to correspond to a motion in a photo view mode according to one embodiment of the present invention.

In FIG. 12A, 12B, 12C, 12D, 12E and 12F, assume that a photo view mode setting function is designated in advance to correspond to a motion of a V shape.

Referring to FIG. 12A, a user is able to input a motion of a V shape in a manner of changing a position of a terminal into '1213' from '1211' via '1212' in order in a photo view mode in which a photo 1210 previously stored in the memory is displayed.

If the sensing unit detects the motion of the V shape, the controller 180 executes the photo view mode of a thumbnail type to correspond to the motion of the V shape, whereby a photo of a thumbnail type 1220, as shown in FIG. 12B, is displayed on the touchscreen.

Therefore, the user is facilitated to execute the photo view mode of the thumbnail type through a simple motion in the photo view mode, thereby being provided with convenience.

Moreover, the present invention is able to additionally provide a function of displaying a specific photo through a motion in a manner of enlarging or overlapping the specific photo while a photo view mode of a thumbnail type is executed.

This is described with reference to FIG. 12C and FIG. 12D as follows.

In FIG. 12C and FIG. 12D, assume that a photo enlarging function is designated in advance to be set to correspond to a motion of an L shape.

Referring to FIG. 12C, while a photo view mode is executed, a user is able to select a photo 1230 of a thumbnail type corresponding to a first icon through a long touch.

After the photo 1230 of the thumbnail type has been selected through the long touch, the a user is able to input a motion of an L shape in a manner of changing a position of a terminal into '1233' from '1231' via '1232' in order.

If the sensing unit detects the motion of the L shape, referring to FIG. 12D, the controller 180 enlarges the photo 1230 of the thumbnail type selected through the long touch and then displays an enlarged photo 1240 on the touchscreen.

And, the present invention is able to provide a function of selecting a plurality of photos of a thumbnail type and displaying the selected photos in a manner that the selected photos are overlapped with each other.

In FIG. 12E and FIG. 12F, assume that a function of displaying photos by overlapping the corresponding photos with each other is set in advance to correspond to a motion of an L shape.

Referring to FIG. 12E, while a photo view mode of a thumbnail type is executed, a user is able to select a plurality of photos 1250 and 1251 of a thumbnail type, (i.e., two photos 1250 and 1251) corresponding to a first icon through a long touch.

After the photos 1250 and 1251 of the thumbnail type have been selected through the long touch, a user is able to input a motion of an L shape in a manner of changing a position of a terminal into '1254' from '1252' via '1253' in order.

If the sensing unit detects the motion of the L shape, referring to FIG. 12F, the controller 180 controls a photo 1260, which is generated from overlapping the photos 1250 and 1251 of the thumbnail type selected through the long touch with each other, to be displayed on a partial area of the touchscreen.

In doing so, an overlapped ratio, a displayed position and the like can be randomly changed by the user.

Moreover, according to another embodiment of the present invention, a recording function of recording or capturing an executed state to correspond to a motion in a video call mode can be provided.

FIG. 13A and 13B are diagrams of one example for providing a function of recording or capturing an executed state conveniently to correspond to a motion in the course of a video call according to one embodiment of the present invention.

In FIG. 13A and 13B, assume that a function of recording or capturing an executed state of an application is designated in advance to correspond to a motion of an L shape.

Referring to FIG. 13A, a user is able to input a motion of an L shape in a manner of changing a position of a terminal into '1313' from '1311' via '1312' in order while making a video call 1310 with a third party.

If the sensing unit detects the motion of the L shape, the controller 180 executes a function of recording or capturing a running state of an application to correspond to the motion of the L shape, referring to FIG. 13B, a recording mode 1320 is displayed on the touchscreen.

Therefore, the user is facilitated to execute the recording mode through a simple motion in a video call mode, thereby being provided with convenience.

Meanwhile, according to another embodiment of the present invention, a user can be provided with a function of facilitating an automatic update of a first application to be executed through a first motion.

FIG. 14 is a diagram of one example for setting an automatic update function of a specific application to correspond to a motion according to one embodiment of the present invention.

In FIG. 14, assume that an automatic update function of an application is designated in advance to correspond to a motion of an L shape. And, assume that 7 updates are scheduled for a first application corresponding to a first icon 1410.

Referring to FIG. 14, a user is able to input a motion of an L shape in a manner of changing a position of a terminal into '1413' from '1411' via '1412' in order while selecting a first icon 1410 through a long touch.

If the sensing unit detects the motion of the L shape, since an automatic update function is set to correspond to the motion of the L shape, 7 updates of the first application corresponding to the first icon 1410 are automatically executed. Therefore, the user can be provided with convenience.

According to a further embodiment of the present invention, a function of facilitating a specific information to be viewed to correspond to a first motion in an augmented reality can be provided.

FIG. 15A and 15B are diagrams of one example for providing a function of facilitating a specific information to be viewed to correspond to a motion in an augmented reality according to one embodiment of the present invention.

In FIG. 15A and 15B, assume that a function of displaying a specific information in an augmented reality is designated in advance to correspond to a motion of an L shape. And, assume that a touch input having a first pattern is a long touch.

Referring to FIG. 15A, when an augmented reality is being displayed on the touchscreen, a user is able to input a motion of an L shape in a manner of changing a position of a terminal into '1513' from '1511' via '1512' in order while selecting a prescribed target 1510 corresponding to a first icon through a long touch.

Referring to FIG. 15B, if the sensing unit detects the motion of the L shape, the controller 180 displays an information 1520 on the prescribed target 1510 on a predetermined area of the touchscreen to correspond to the motion of the L shape. Therefore, the user is facilitated to obtain a specific information through a simple motion in an augmented reality state, thereby being provided with convenience.

In addition to the above-described embodiments of the present invention, a user can be provided with a lock attribute function, a hide function, a mute function of replacing an audio effect by vibration or silence despite that an original operation supports the audio effect, a protection function for preventing a random deletion or change by a user, a background function for residing in a memory as a background instead of being completely terminated despite a command for terminating a corresponding application and the like. Yet, as the above-mentioned descriptions are exemplary for the present invention, it is apparent that various kinds of functions can be provided to a user through prescribed functions.

According to one embodiment of the present invention, the above-described methods can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet).

The aforementioned mobile terminal including the display unit for displaying the 3D mages are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal comprising:
a sensing unit configured to detect motion;
a touchscreen configured to display a plurality of icons; and
a controller configured to control at least one function corresponding to at least one first motion of a plurality of different motions to be set in a first application corresponding to at least a first icon of the plurality of icons when the at least a first icon is selected by a touch on the touchscreen having a first pattern and the at least one first motion is detected via the sensing unit,
wherein one or more functions correspond to each of the plurality of different motions.

2. The mobile terminal of claim 1,
wherein a plurality of first icons are selected by the touch on the touchscreen having the first pattern.

3. The mobile terminal of claim 1,
wherein the controller is further configured to control a plurality of functions to be set in the first application, each of the plurality of functions corresponding to one of a plurality of first motions that exist.

4. The mobile terminal of claim 1,
wherein the controller is further configured to control the set at least one function to be canceled if the at least a first icon is subsequently selected by a touch on the touchscreen having a second pattern.

5. The mobile terminal of claim 1,
wherein the controller is further configured to control the at least one function corresponding to the at least one first motion to be set in a plurality of applications that correspond to a plurality of the icons if a second icon of the plurality of icons is selected by a touch on the touchscreen having the first pattern and the at least one first motion is detected via the sensing unit.

6. The mobile terminal of claim 5,
wherein the controller is further configured to control the set at least one function to be canceled if the second icon is subsequently selected by a touch on the touchscreen having a second pattern.

7. The mobile terminal of claim 1,
wherein the controller is further configured to control the touchscreen to display a first visual effect on a prescribed area of the touchscreen when the at least a first icon is selected by the touch on the touchscreen having the first pattern, the first visual effect indicating the one or more functions that correspond to each of the plurality of different motions.

8. The mobile terminal of claim 7,
wherein the controller is further configured to control the touchscreen to display the first visual effect such that one or more function previously set in the first application is differentiated from the other of the one or more functions that correspond to each of the plurality of different motions.

9. The mobile terminal of claim 1, wherein:
the controller is further configured to control the touchscreen to display a menu on a prescribed area on the touchscreen; and
the menu is either for changing the one or more functions that correspond to each of the plurality of different motions or for adding at least one second motion to which the at least one function corresponds.

10. The mobile terminal of claim 1,
wherein the at least one function comprises at least a lock function, a notification function, a setting menu entry function or a location service function.

11. A method of controlling a mobile terminal, the method comprising:
displaying a plurality of icons on a touchscreen;
detecting a touch on the touchscreen having a first pattern to select at least a first icon from the plurality of icons displayed on the touchscreen;
detecting at least one first motion of a plurality of different motions via a sensing unit; and
setting a function corresponding to the detected at least one first motion in a first application corresponding to the selected at least a first icon,
wherein one or more functions correspond to each of the plurality of different motions.

12. The method of claim 11,
further comprising selecting a plurality of first icons in response to the touch on the touchscreen having the first pattern.

13. The method of claim 11,
further comprising setting a plurality of functions in the first application, each of the plurality of functions corresponding to one of a plurality of first motions that exist.

14. The method of claim 11, further comprising:
detecting a touch on the touchscreen having a second pattern to select the at least a first icon; and
cancelling the set at least one function in response to the detected touch having the second pattern.

15. The method of claim 11, further comprising:
detecting a touch on the touchscreen having the first pattern to select a second icon;
detecting the at least one first motion of a plurality of different motions via the sensing unit; and
setting the at least one function corresponding to the detected at least one first motion in a plurality of applications that correspond to a plurality of the icons.
